# EUROPEAN PATENT SPECIFICATION

(11) **EP 4 098 861 B1**
(45) Date of publication and mention of the grant of the patent: **11.09.2024**
(21) Application number: 22186340.0
(22) Date of filing: 09.02.2016
(51) Int. Cl.: F02K 3/06, F02C 3/107, F02C 7/36

(54) **GEARED TURBOFAN**
GETRIEBETURBOFAN
TURBORÉACTEUR À DOUBLE FLUX À ENGRENAGE

(30) Priority: 09.02.2015 US 201514616922
(43) Date of publication of application: 07.12.2022
(62) Divisional of application: 16154894.6
(73) Proprietor: RTX Corporation, Farmington, CT 06032 (US)
(72) Inventor: SCHWARZ, Frederick M., Glastonbury, CT 06033 (US); SHERIDAN, William G., Southington, CT 06489 (US)
(74) Representative: Dehns

(56) References cited:
- WO-A2-2015/012923
- US-A1- 2007 240 399
- US-A1- 2008 120 839
- US-A1- 2009 056 306
- US-A1- 2012 237 335
- DALE RAUCH: "DESIGN STUDY OF AN AIR PUMP AND INTEGRAL LIFT ENGINE ALF-504 USING THE LYCOMING 502 CORE", NASA REPORT CR-120992, 31 July 1972 (1972-07-31), XP055273059, Retrieved from the Internet <URL:http://ntrs.nasa.gov/archive/nasa/casi.ntrs.nasa.gov/19730004744.pdf> [retrieved on 20160517]
- MARK DALY ET AL: "Aero-engines", JANE'S, 1 March 2008 (2008-03-01), pages 706 - 712, XP055491333, Retrieved from the Internet <URL:jae.janes.com> [retrieved on 20180710]

## Description

### BACKGROUND OF THE INVENTION

This application relates to a gear reduction which is particularly applicable to relatively small diameter geared turbofans.

Gas turbine engines are known and typically include a fan delivering air into a compressor. The air is compressed and delivered into a combustor where it is mixed with fuel and ignited. Products of this combustion pass downstream over turbine rotors driving them to rotate. The turbine rotors, in turn, drive compressor and fan rotors.

Historically, the fan rotor rotated at the same speed as a turbine rotor. More recently, it has been proposed to include a gear reduction between a fan driving turbine and the fan rotor. With this change, the fan rotor may increase in diameter and rotate at slower speeds. However, the inclusion of the gear reduction raises packaging challenges.

XP055273059 (Dale Rauch: "Design study of an air pump and integral lift engine ALF-504 using the Lycoming 502 core", NASA Report CR-120922, 31 July 1972) discloses a prior art gas turbine engine. A prior art gas turbine engine, having the features of the preamble of claim 1, is disclosed in WO 2015/012923 A2,

### SUMMARY OF THE INVENTION

According to the present invention, a gas turbine engine is provided according to claim 1.

In another embodiment according to the previous embodiment, the gear reduction is a star gear reduction.

In another embodiment according to any of the previous embodiments, the gear reduction is equal to about 3.1.

In another embodiment according to any of the previous embodiments, a bypass ratio may be defined as a volume of air delivered by the fan rotor into a bypass duct compared to the volume of air delivered into the compressor, and wherein the bypass ratio is greater than about 10.0.

These and other features may be best understood from the following drawings and specification.

### BRIEF DESCRIPTION OF THE DRAWINGS

Figure 1A schematically shows an embodiment of a gas turbine engine.
Figure 1B shows an alternative embodiment of a gas turbine engine.
Figure 2 shows a detail of the gas turbine engine of Figure 1A or Figure 1B.
Figure 3 shows a detail of an embodiment of a gear reduction for the gas turbine engine of Figure 1A or Figure 1B.

### DETAILED DESCRIPTION

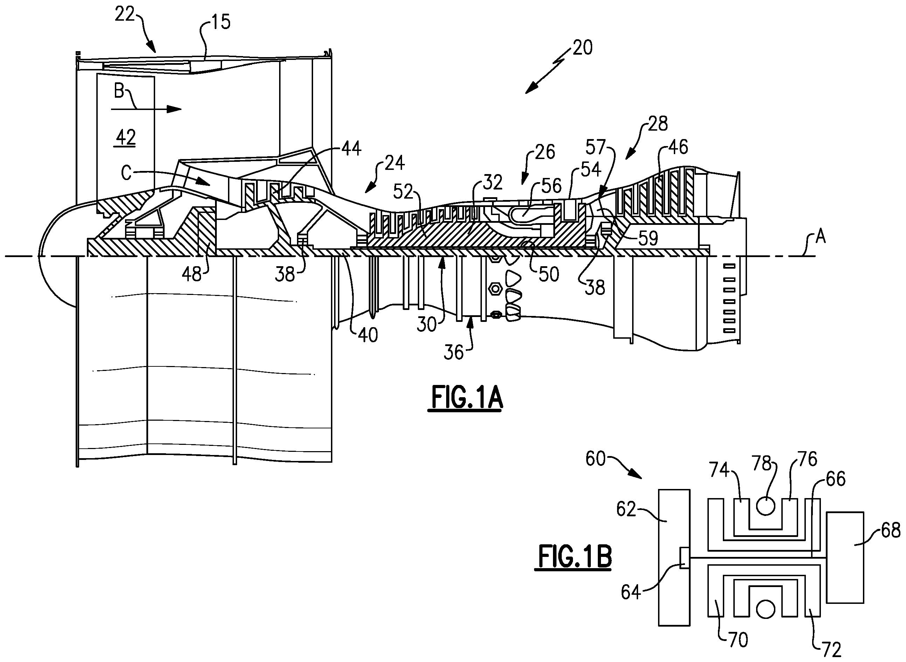

Figure 1A schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6:1), with an example embodiment being greater than about ten (10:1), the geared architecture 48 is an epicyclic gear train, such as a planetary gear system or other gear system, with a gear reduction ratio of greater than about 2.3 (2.3: 1) and the low pressure turbine 46 has a pressure ratio that is greater than about five (5:1). In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3 (2.3:1). It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R = K × 9/5). The "Low corrected fan tip speed" as disclosed herein according to one non-limiting embodiment is less than about 1150 ft / second (350.5 meters/second).

Figure 1B shows an alternative embodiment. Figure 1B shows an embodiment 60, wherein there is a fan drive turbine 68 driving a shaft 66 to in turn drive a fan rotor 62. A gear reduction 64 may be positioned between the fan drive turbine 68 and the fan rotor 62. This gear reduction 64 may be structured and operate like the gear reduction disclosed above. A compressor rotor 70 is driven by an intermediate pressure turbine 72, and a second stage compressor rotor 74 is driven by a turbine rotor 76. A combustion section 78 is positioned intermediate the compressor rotor 74 and the turbine section 76.

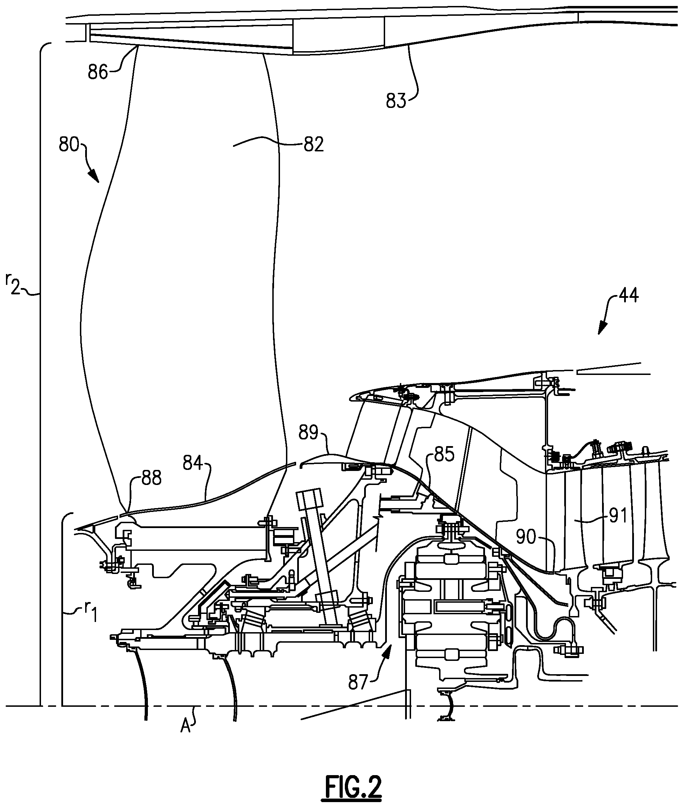

Figure 2 shows an engine 80 which may be a relatively small diameter engine. Fan blades 82 extend from a hub 84. A nacelle 83 defines a bypass duct. A radially outer tip 86 of the fan blades 82 at an inlet end is spaced from a radially inner inlet end 88 of the hub 84. A first radius r₁ can be defined between the centerline A and the point 88. A second radius r₂ is defined between centerline A and point 86. It is desirable to decrease a ratio of r₁:r₂. However, there are limitations on how small the ratio can be made. The ratio of r₁:r₂ is greater than or equal to about 0.24 and less than or equal to about 0.36.

A point 89 is a radially outermost or "highest" point on a curved or contoured surface leading into the compressor section 44. Note, this structure could also be included in an engine as disclosed in Figure 1B. A point 90 is defined immediately upstream of the first blade row 91 of the compressor section 44. As can be seen, a surface 85 extends between points 89 and 90. A gear reduction 87 is positioned intermediate the points 89 and 90. As can be appreciated from this figure, the gear reduction includes multiple components which must be packaged radially inwardly of the surface 85. In addition, the gear reduction 87 is positioned intermediate the fan hub 84 and the point 90.

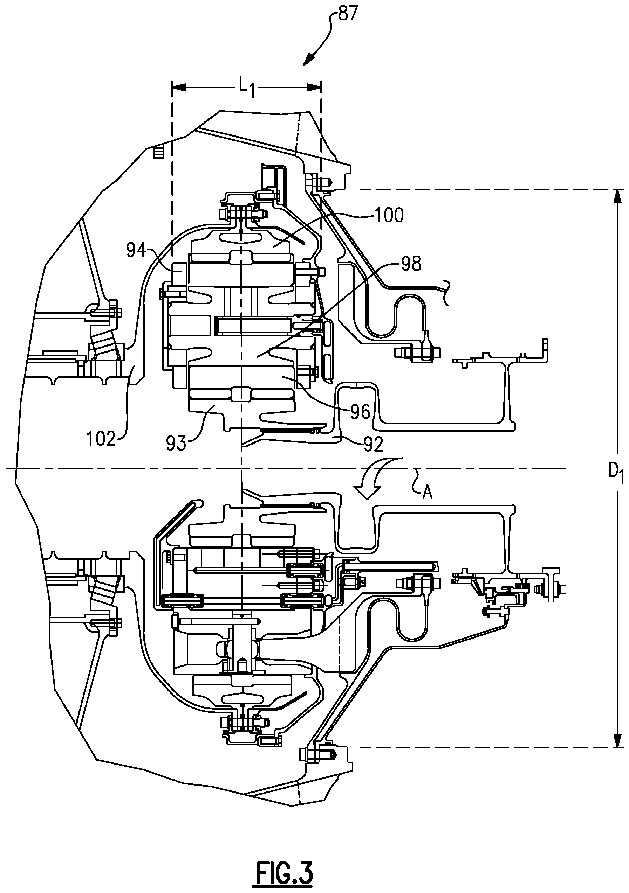

Figure 3 shows the gear reduction 87. An input shaft 92 is driven by the fan drive turbine 46/68 and, in turn, drives a sun gear 93. A carrier 94 mounts the sun gear 93 and a plurality of star gears 96. Star gears 96 are mounted on journals 98 which are fixed within the carrier 94. As known, the sun gear 93 rotates and, in turn, rotates the star gears 96, which then cause a ring gear 100 to rotate. Ring gear 100 drives a flexible shaft 102 which, in turn, drives the fan hub 84.

The gear reduction 87 is a star gear reduction and has a gear ratio of greater than or equal to about 3.0. In one embodiment, the gear reduction was 3.1.

In order to package the gear reduction 87 within a relatively small space, a diameter Di of the gear reduction 87 is desirably reduced. To achieve this reduction, the journal bearings 98 and the ring gear 100 are made to be relatively axially long or extend for a relatively great distance l₁ measured along the axis A.

An inlet to surface 85 leads into the compressor. The surface 85 curves from a radially outermost point 89 radially inwardly to a point 90 leading into the first compressor blade row 91. The gear reduction 87 is positioned between the radially outermost point 89 and point 90. Point 90 is radially inward of a radially outermost point of ring gear 100.

In this manner, an engine can be designed which has a smaller diameter than in the past. Thus, surface 85 can move inwardly to result in this small diameter. Also, surface 85 can be designed for best operation of the engine rather than being constrained by the need to package gear reduction 87.

A volume of the ring gear 100 plus the carrier 94 is greater than equal to 899 inches³ (14732 cm³) and less than or equal to 1349 inches³ (22106.15 cm³). The length L₁ may be greater than or equal to about 3.762 inches and less than or equal to about 5.7 inches.

A ratio of the length Li to the diameter Di may be greater than or equal to about 0.20 and less than or equal to about 0.40.

The disclosed engine is particularly useful in lower thrust ranges. Engines having greater than or equal to 17,000 lbs (75.62 kN) of thrust and less than or equal to about 26,000 lbs (115.65 kN) of thrust benefit from this design.

In exemplary engines, the bypass ratio may be greater than 10 and, in one embodiment, may be greater than or equal to about 12.0.

Although an embodiment of this invention has been disclosed, a worker of ordinary skill in this art would recognize that certain modifications would come within the scope of this invention. For that reason, the following claims should be studied to determine the true scope and content of this invention.

## Claims

1. A gas turbine engine (80) having, in operation, greater than or equal to 17,000 lbs (75.62 kN) of thrust and less than or equal to about 26,000 lbs (115.65 kN) of thrust, comprising:
a fan rotor having a hub (84) and a plurality of fan blades (82) extending radially outwardly of said hub (84);
a compressor positioned downstream of the fan rotor, the compressor having a first compressor blade row (91) defined along a rotational axis (A) of said fan rotor; and
a gear reduction (87) positioned axially between said first compressor blade row (91) and said fan rotor, said gear reduction (87) including a ring gear (100) and a carrier (94), said carrier (94) having an axial length (L₁) and said ring gear (100) having an outer diameter (D₁), and said gear reduction (87) is connected to drive said hub to rotate (84),
wherein a volume is defined for said carrier (94) and said ring gear (100), and said volume being designed to be greater than or equal to 899 inches³ (14732 cm³) and less than or equal to about 1349 inches³ (22106.15 cm³),
the hub (84) has a radius (r₁) defined at an inlet point of said hub (84), said fan blades (82) have a radius (r₂), and a ratio of said hub radius (r₁) to said fan blade radius (r₂) is less than or equal to 0.36 and greater than or equal to 0.24,
a gear ratio of said gear reduction (87) is greater than or equal to 3.0, and
an inlet into said compressor extends radially, inwardly along a surface (85) from a radially outermost point (89) to a point (90) leading into said first compressor blade row (91), said gear reduction (87) is positioned between said radially outermost point (89) and said point (90) leading into said first compressor blade row (91), and said point (90) leading into said first compressor blade row (91) is radially inward of said ring gear (100), **characterised in that**:
a ratio of said axial length (L₁) to said outer diameter (D₁) is greater than or equal to 0.20 and less than or equal to 0.40.

2. The gas turbine engine (80) as set forth in claim 1, wherein said gear reduction (87) is a star gear reduction.

3. The gas turbine engine (80) as set forth in claim 1 or 2, wherein said gear reduction (87) is equal to 3.1.

4. The gas turbine engine (80) as set forth in any preceding claim, wherein a bypass ratio is defined as a volume of air delivered by said fan rotor into a bypass duct compared to the volume of air delivered into said compressor, and said bypass ratio is greater than 10.0.

## Patentansprüche

1. Gasturbinentriebwerk (80), das im Betrieb mehr als oder gleich 17.000 lb (75,62 kN) Schub und weniger als oder gleich etwa 26.000 lb (115,65 kN) Schub aufweist, umfassend:
einen Fanrotor, der eine Nabe (84) und eine Vielzahl von Fanblättern (82) aufweist, die sich radial nach außen von der Nabe (84) aus erstrecken;
einen Verdichter, der stromabwärts des Fanrotors positioniert ist, wobei der Verdichter eine erste Verdichterblattreihe (91) aufweist, die entlang einer Rotationsachse (A) des Fanrotors definiert ist; und
ein Untersetzungsgetriebe (87), das axial zwischen der ersten Verdichterblattreihe (91) und dem Fanrotor positioniert ist, wobei das Untersetzungsgetriebe (87) ein Hohlrad (100) und einen Träger (94) beinhaltet, wobei der Träger (94) eine axiale Länge (L₁) aufweist und das Hohlrad (100) einen Außendurchmesser (D₁) aufweist,
und das Untersetzungsgetriebe (87) verbunden ist, um die Nabe zum Drehen anzutreiben (84),
wobei ein Volumen für den Träger (94) und das Hohlrad (100) definiert ist und das Volumen dazu ausgelegt ist, größer als oder gleich 899 Zoll³ (14732 cm³) und kleiner als oder gleich etwa 1349 Zoll³ (22106, 15 cm³) zu sein,
die Nabe (84) einen Radius (r₁) aufweist, der an einem Einlasspunkt der Nabe (84) definiert ist, die Fanblätter (82) einen Radius (r₂) aufweisen und ein Verhältnis zwischen dem Nabenradius (r₁) und dem Fanblattradius (r₂) kleiner als oder gleich 0,36 und größer als oder gleich 0,24 ist,
ein Übersetzungsverhältnis des Untersetzungsgetriebes (87) größer als oder gleich 3,0 ist, und
ein Einlass in den Verdichter sich radial nach innen entlang einer Oberfläche (85) von einem radial äußersten Punkt (89) zu einem Punkt (90) erstreckt, der in die erste Verdichterblattreihe (91) führt, das Untersetzungsgetriebe (87) zwischen dem radial äußersten Punkt (89) und dem Punkt (90), der in die erste Verdichterblattreihe (91) führt, positioniert ist, und der Punkt (90), der in die erste Verdichterblattreihe (91) führt, radial innerhalb des Hohlrads (100) liegt, **dadurch gekennzeichnet, dass**:
ein Verhältnis der axialen Länge (L₁) zu dem Außendurchmesser (D₁) größer als oder gleich 0,20 und kleiner als oder gleich 0,40 ist.

2. Gasturbinentriebwerk (80) nach Anspruch 1, wobei das Untersetzungsgetriebe (87) ein Sternuntersetzungsgetriebe ist.

3. Gasturbinentriebwerk (80) nach Anspruch 1 oder 2, wobei das Untersetzungsgetriebe (87) gleich 3,1 ist.

4. Gasturbinentriebwerk (80) nach einem der vorhergehenden Ansprüche, wobei ein Nebenstromverhältnis als ein Luftvolumen definiert ist, das durch den Fanrotor in eine Nebenstromleitung abgegeben wird, verglichen mit dem Luftvolumen, das in den Verdichter abgegeben wird, und wobei das Nebenstromverhältnis größer als 10,0 ist.

## Revendications

1. Moteur à turbine à gaz (80) comportant, en fonctionnement, une poussée supérieure ou égale à 17 000 livres (75,62 kN) et inférieure ou égale à environ 26 000 livres (115,65 kN), comprenant :
Un rotor de ventilateur comportant un moyeu (84) et une pluralité de pales de ventilateur (82) se prolongeant radialement vers l'extérieur dudit moyeu (84) ;
un compresseur positionné en aval du rotor de ventilateur, le compresseur comportant une première rangée de pales de compresseur (91) définies le long d'un axe de rotation (A) dudit rotor de ventilateur ; et
un réducteur à engrenages (87) positionné axialement entre ladite première rangée de pales de compresseur (91) et ledit rotor de ventilateur, ledit réducteur à engrenages (87) comportant une couronne dentée (100) et un support (94), ledit support (94) comportant un axe axial longueur (L₁) et ladite couronne dentée (100) comportant un diamètre extérieur (D₁),
et ledit réducteur à engrenages (87) est connecté pour entraîner ledit moyeu en rotation (84),
dans lequel un volume est défini pour ledit support (94) et ladite couronne dentée (100), et ledit volume étant conçu pour être supérieur ou égal à 899 pouces³ (14 732 cm³) et inférieur ou égal à environ 1 349 pouces³ (22 106,15 cm³),
le moyeu (84) a un rayon (r₁) défini au niveau d'un point d'entrée dudit moyeu (84), lesdites pales de ventilateur (82) ont un rayon (r₂), et un rapport dudit rayon de moyeu (r₁) audit rayon de pale de ventilateur (r₂) est inférieur ou égal à 0,36 et supérieur ou égal à 0,24,
un rapport de démultiplication dudit réducteur à engrenages (87) est supérieur ou égal à 3,0, et
une entrée dans ledit compresseur se prolonge radialement, vers l'intérieur, le long d'une surface (85) depuis un point radialement le plus à l'extérieur (89) vers un point (90) menant à ladite première rangée de pales de compresseur (91), ledit réducteur à engrenages (87) est positionné entre ledit point radialement le plus à l'extérieur (89) et ledit point (90) menant à ladite première rangée de pales de compresseur (91), et ledit point (90) menant à ladite première rangée de pales de compresseur (91) est radialement vers l'intérieur de ladite couronne dentée (100), **caractérisé en ce que** :
un rapport de ladite longueur axiale (L₁) audit diamètre extérieur (D₁) est supérieur ou égal à 0,20 et inférieur ou égal à 0,40.

2. Moteur à turbine à gaz (80) selon la revendication 1, dans lequel ledit réducteur à engrenages (87) est un réducteur à engrenages en étoile.

3. Moteur à turbine à gaz (80) selon la revendication 1 ou 2, dans lequel ledit réducteur à engrenages (87) est égal à 3,1.

4. Moteur à turbine à gaz (80) selon une quelconque revendication précédente, dans lequel un taux de dilution est défini comme un volume d'air délivré par ledit rotor de soufflante dans un conduit de dérivation comparé au volume d'air délivré dans ledit compresseur, et ledit taux de contournement est supérieur à 10,0.
